# EUROPEAN PATENT APPLICATION

(11) **EP 4 620 546 A1**
(43) Date of publication of application: **24.09.2025**
(21) Application number: 23891515.1
(22) Date of filing: 13.11.2023
(51) Int. Cl.: B01D 17/04, B01D 11/04, B01D 17/12

(54) **WATER/ORGANIC SOLVENT SEPARATION DEVICE, AND WATER/ORGANIC SOLVENT SEPARATION METHOD**

(30) Priority: 14.11.2022 JP 2022181769
(71) Applicant: Mitsui Chemicals Asahi Life Materials Co., Ltd., Tokyo 104-0028 (JP)
(72) Inventor: TANIGUCHI, Kohei, Tokyo 100-0006 (JP); TSURITANI, Kanoko, Tokyo 100-0006 (JP); KUSAKABE, Junichi, Tokyo 100-0006 (JP)
(74) Representative: dompatent von Kreisler Selting Werner - Partnerschaft von Patent- und Rechtsanwälten mbB
(86) International application number: PCT/JP2023/040713
(87) International publication number: WO 2024/106368

(57) **Abstract**

Provided are: a water/organic solvent separation device that, from a liquid mixture of water/organic solvent that has a high ratio of dispersed phase, can separate water and an organic solvent with high efficiency; a water/organic solvent separation method using the water/organic solvent separation device; a solvent extraction device; and a solvent extraction method using the solvent extraction device. This invention relates to a water/organic solvent separation device, characterized by comprising a coalescing filter that is supplied with a liquid mixture containing water and an organic solvent and that performs separation processing on the liquid mixture, and a housing that is supplied with the liquid mixture subjected to separation processing by the coalescing filter, and characterized in that the coalescing filter is disposed within the housing, and the housing has a structure or a mechanism that prevents contact between an interface of the water and the organic solvent and the coalescing filter. This invention also relates to: a water/organic solvent separation method using the water/organic solvent separation device; a solvent extraction device; and a solvent extraction method using the solvent extraction device.

## Description

### FIELD

The present invention relates to a water/organic solvent separating apparatus, to a water/organic solvent separation method using the apparatus, to a solvent extraction apparatus and to a solvent extraction method using the apparatus.

### BACKGROUND

Solvent extraction is a common method for separation and purification, wherein two or more different immiscible liquids such as water and an organic solvent are used to extract a specific component from one liquid to the other liquid, and the two liquids are separated to achieve separation and purification of the specific component.

Solvent extraction is generally carried out on an industrial scale using an apparatus known as a mixer settler. A mixer settler comprises a stirring tank and a settling tank, and after two different mutually non-miscible liquids have been stirred in the stirring tank and a specific component has been extracted from the one liquid into the other liquid, the liquid mixture is allowed to stand in the settling tank and separated based on the difference in specific gravity between the two liquids, thereby allowing separation and purification of the specific component.

PTL 1 discloses an oil-water separation method allowing highly efficient separation of a liquid mixture, used in a solvent extraction method, the method comprising a step of crude separation of an organic layer and an aqueous layer and a step of treating the crudely separated organic layer and/or aqueous layer using a coalescing filter.

### [CITATION LIST]

### [PATENT LITERATURE]

[PTL 1] Japanese Unexamined Patent Publication No. 2022-019174

### SUMMARY

### [TECHNICAL PROBLEM]

The invention described in Reference 1, however, requires crude separation with a settler at a stage prior to the coalescing filter, and this tends to increase the equipment size.

It has been considered that high efficiency separation of water and an organic solvent in a water/organic solvent mixture with a high dispersed phase ratio, by solvent extraction using a coalescing filter, could obviate the need for a settler and allow the apparatus to be downsized, thus helping to achieve at least the same level of extraction efficiency as with a mixer settler and to increase processing volume with an apparatus at least as small as a mixer settler, but such technology has been unknown, even in Reference 1.

In light of the prior art, the problem to be solved by the invention is to provide a water/organic solvent separating apparatus that allows high efficiency separation of water and an organic solvent from a water/organic solvent mixture having a high dispersed phase ratio, as well as a water/organic solvent separation method using the apparatus, a solvent extraction apparatus, and a solvent extraction method using the apparatus.

### [SOLUTION TO PROBLEM]

As a result of much diligent research with the aim of solving the aforementioned problem, the present inventors have found, unexpectedly, that by providing a water/organic solvent separating apparatus that is supplied with a liquid mixture comprising water and an organic solvent, and is provided with a coalescing filter that carries out separation treatment of the liquid mixture and a housing to which the liquid mixture that has been separated by the coalescing filter is supplied, the coalescing filter being disposed inside the housing and the housing having a structure or mechanism such that the water/organic solvent interface and coalescing filter do not contact, it is possible to accomplish high-efficiency separation of water and an organic solvent from a water/organic solvent mixture having a high dispersed phase ratio, and the invention was thereupon completed.

Specifically, the present invention provides the following.
[1] A water/organic solvent separating apparatus that is supplied with a liquid mixture comprising water and an organic solvent, and is provided with a coalescing filter that carries out separation treatment of the liquid mixture and a housing to which the liquid mixture that has been separated by the coalescing filter is supplied, the coalescing filter being disposed inside the housing and the housing having a structure or mechanism such that the water/organic solvent interface and coalescing filter do not contact.
**[2]** The water/organic solvent separating apparatus according to **[1]** above, wherein when the volume of the housing is divided into an upper half and a lower half on the horizontal plane, the coalescing filter is disposed so as to be completely contained within the upper half or the lower half.
**[3]** The water/organic solvent separating apparatus according to **[1] or [2]** above, wherein the housing is provided with means for detecting the water/organic solvent interface, and an outlet at the upper part and/or lower part of the housing, and is provided with a mechanism that opens and closes the outlet in such a manner that the water/organic solvent interface does not contact with the coalescing filter, to adjust the height of the water/organic solvent interface.
**[4]** A solvent extraction apparatus comprising a water/organic solvent separating apparatus according to **[1] or [2]** above, and provided with an extraction apparatus that mixes water and an organic solvent to carry out extraction at a stage prior to the water/organic solvent separating apparatus, and discharges the liquid mixture containing the water and organic solvent.
**[5]** A water/organic solvent separation method comprising the following steps:
   a liquid mixture separation step in which a liquid mixture comprising water and an organic solvent and having a dispersed phase ratio of 10 vol% to 50 vol% is supplied to a coalescing filter disposed inside a housing, which is provided with means for detecting the water/organic solvent interface and an outlet at the upper part and/or lower part, and separation treatment of the liquid mixture is carried out;
   an interface detection step in which the height of the water/organic solvent interface is detected by the means for detecting the water/organic solvent interface; and
   a height-adjusting step in which the outlet is opened and closed to adjust the height of the water/organic solvent interface in such a manner that the water/organic solvent interface and the coalescing filter do not contact.
**[6]** A solvent extraction method comprising the following steps:
   a liquid mixture preparation step in which water and an organic solvent are mixed and extracted to prepare a liquid mixture comprising the water and organic solvent and having a dispersed phase ratio of 10 vol% to 50 vol%,
   a liquid mixture separation step in which the obtained liquid mixture is supplied to a coalescing filter disposed inside a housing, which is provided with means for detecting the water/organic solvent interface and an outlet at the upper part and/or lower part, and separation treatment of the liquid mixture is carried out;
   an interface detection step in which the height of the water/organic solvent interface is detected by the means for detecting the water/organic solvent interface; and
   a height-adjusting step in which the outlet is opened and closed to adjust the height of the water/organic solvent interface in such a manner that the water/organic solvent interface and the coalescing filter do not contact.
[7] The solvent extraction method according to [5] or [6] above, wherein when the volume of the housing is divided into an upper half and a lower half on the horizontal plane, the coalescing filter is disposed so as to be completely contained within the upper half or the lower half.

### [ADVANTAGEOUS EFFECTS OF INVENTION]

The water/organic solvent separating apparatus, the water/organic solvent separation method using the apparatus, the solvent extraction apparatus and the solvent extraction method using the apparatus, according to the invention, allow high-efficiency separation of water and an organic solvent from a water/organic solvent mixture having a high dispersed phase ratio.

### BRIEF DESCRIPTION OF DRAWINGS

Fig. 1 is a schematic diagram showing an example of a water/organic solvent separating apparatus of the embodiment.
Fig. 2 is a schematic diagram showing an example of a solvent extraction apparatus of the embodiment.

### DESCRIPTION OF EMBODIMENTS

The invention will now be explained in detail by embodiments.

One embodiment of the invention is a water/organic solvent separating apparatus that is supplied with a liquid mixture comprising water and an organic solvent, and is provided with a coalescing filter that carries out separation treatment of the liquid mixture and a housing to which the liquid mixture that has been separated by the coalescing filter is supplied, the coalescing filter being disposed inside the housing and the housing having a structure or mechanism such that the water/organic solvent interface and coalescing filter do not contact.

The coalescing filter is a filter that, when the water/organic solvent mixture passes through the filter material it comprises, causes coarsening of fine liquid drops from the continuous phase, promoting specific gravity separation and thereby allowing separation of the water and organic solvent. The coalescing filter used may be one that is known in the prior art, with no particular restrictions on its form, although a cartridge type is preferred. The filter material used in the coalescing filter is not particularly restricted so long as it has the function of trapping and coarsening finely dispersed droplets, and it may be a nonwoven fabric or film, and most preferably a nonwoven fabric from the viewpoint of separability, lifespan and pressure loss. Filter materials include polyesters such as polyethylene terephthalate, polyethylene terephthalate/adipate, polyethylene terephthalate/isophthalate, polyethylene terephthalate/sebacate, polyethylene terephthalate-dodecane dioate and polybutylene terephthalate, polyamides such as polyhexamethylene adipamide, polyhexamethylene sebacamide, polyhexamethylene decamide, polyhexamethylene hexamide, polycapramide, polyoctamide, polynonamide, polydecamide and polytetramide (for example, polyamide 6 and polyamide 66), polypropylenes, polyethylenes, and glass fibers, which may be selected as appropriate for the pH of the aqueous layer and the chemical resistance of the organic layer in the fluid. Preferably at least 90% of the fiber components forming the filter material of the coalescing filter consists of one or more types selected from the group consisting of polyethylene terephthalate, polyamide 6, polyamide 66 and glass.

The housing is a container that houses the coalescing filter and receives the water/organic solvent mixture that has passed through the coalescing filter. The housing is not particularly restricted in terms of its shape and material, and any one known in the prior art may be used. The housing may be equipped with an inlet and outlet for various liquids, as well as sensors and instruments.

In the water/organic solvent separating apparatus of the embodiment, the coalescing filter is disposed inside the housing, and the housing has a structure or mechanism such that the water/organic solvent interface and coalescing filter do not contact.

The present inventors have recently found that in a conventional water/organic solvent separating apparatus, when a water/organic solvent mixture with a high dispersed phase ratio, and specifically a water/organic solvent mixture with a dispersed phase ratio of 10 vol% to 50 vol%, is passed through a coalescing filter, the proportion of dispersed phase inside the housing after separation increases, the coalescing filter and the water/organic solvent interface come into contact inside the housing, and a continuous phase forms a film on the surface of the coalescing filter which is contacting with the separated dispersed phase, the liquid that flows in from the coalescing filter forming liquid bubbles on the film and the liquid bubbles bursting and reforming fine droplets or being directly sucked into the outlet of the housing, all of which tends to result in the problem of lower separation performance. The present inventors further confirmed by experimentation that in the water/organic solvent separating apparatus of the present embodiment, the housing can reduce the aforementioned phenomenon by having a structure or mechanism such that the water/organic solvent interface and coalescing filter do not contact, thus allowing high separation performance to be maintained even when a water/organic solvent mixture with a high dispersed phase ratio has been treated, and the present invention was thereupon completed.

The structure or mechanism such that the water/organic solvent interface and coalescing filter do not contact will be described in detail below.

According to one embodiment of the invention, when the volume of the housing is divided into an upper half and a lower half on the horizontal plane, the coalescing filter is disposed so as to be completely contained in either the upper half or the lower half. With such an arrangement, it is possible to maintain high separation performance, even when a water/organic solvent mixture with a high dispersed phase ratio has been treated, since the water/organic solvent interface and the coalescing filter are no longer in contact.

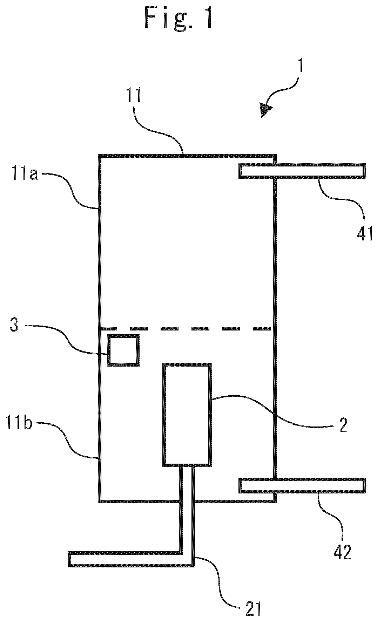

Fig. 1 is an example of a water/organic solvent separating apparatus of the embodiment. The water/organic solvent separating apparatus 1 is provided with a housing 11 and a coalescing filter 2, the coalescing filter 2 being disposed inside the housing 11. The housing 11 is hollow inside, and during use it is filled with water and an organic solvent that have been separated by passing through the coalescing filter 2.

When its volume is divided into an upper half and a lower half on the horizontal plane, the housing 11 is divided into a housing upper part 11a and a housing lower part 11b. When the continuous phase of the water/organic solvent mixture being separated is water and the dispersed phase is the organic solvent, the coalescing filter 2 is disposed so as to be completely contained in the housing lower part 11b, as shown in Fig. 1. Due to this arrangement, the construction is such that the interface between the separated water and organic solvent does not contact with the coalescing filter 2. The organic solvent from which the water has been removed accumulates only in the housing upper part 11a and is discharged through the organic solvent outlet 41, while the water from which the organic solvent has been removed is discharged through the water outlet 42. With such a construction it is possible to prevent lower water/organic solvent separation performance due to formation of liquid bubbles by contact between the coalescing filter 2 and the water/organic solvent interface.

When the continuous phase is the organic solvent and the dispersed phase is water, the coalescing filter 2 is disposed so that it is completely contained in the housing upper part 11a (not shown), likewise making it possible to prevent lowering of water/organic solvent separation performance due to formation of liquid bubbles resulting from contact between the coalescing filter 2 and the water/organic solvent interface, as in the case described above.

According to one embodiment of the invention, the housing is preferably provided with means for detecting the water/organic solvent interface, an outlet being provided on the upper part and/or lower part of the housing, and is also provided with a mechanism that opens and closes the outlet in such a manner that the water/organic solvent interface does not contact with the coalescing filter, to adjust the height of the water/organic solvent interface.

There are no particular restrictions on the mechanism by which the height of the water/organic solvent interface is adjusted, and for example, the mechanism for adjusting the height of the water/organic solvent interface may be a float switch 3 that detects the interface and is situated at approximately the center section of the housing 11 to automatically open and close the organic solvent outlet 41 and/or water outlet 42, as shown in Fig. 1, or a sight glass may be situated at approximately the center section on a side wall of the housing 11, and the height of the water/organic solvent interface may be adjusted by manual opening and closing of the organic solvent outlet 41 and/or water outlet 42 by a person monitoring the housing interior through the sight glass.

Another embodiment of the invention is a solvent extraction apparatus provided with an extraction apparatus that mixes water and an organic solvent to carry out extraction at a stage prior to the water/organic solvent separating apparatus, and discharges the liquid mixture containing the water and organic solvent.

Solvent extraction is a common method for hydrometallurgy wherein, after mixing a metal ion-containing acidic aqueous solution with an extractant and/or a diluted solution specific for the metal, the mixture is separated into the acidic aqueous solution and the extractant and/or diluted solution to obtain a metal ion extract, after which the obtained metal extract is mixed with a different acidic aqueous solution having high acidity for reverse extraction of the metal ion, the mixture is then again separated into the acidic aqueous solution and the extractant and/or diluted solution to obtain a metal ion reverse extract, and the separated reverse extract is subjected to electrolysis or crystallization to recover the metal.

There are no particular restrictions on the height at which the filter of the water/organic solvent separating apparatus is set for use after extraction and reverse extraction in hydrometallurgy, but since the liquid flowing into the apparatus after the extraction step will usually have an aqueous solution as the continuous phase and an organic solvent with a lower specific gravity than water as the dispersed phase, the setting height for the filter is preferably such that, when the volume of the housing is divided into an upper half and a lower half on the horizontal plane, it is completely contained in the lower half of the housing. On the other hand, since the solution that flows into the apparatus after reverse extraction will usually have an organic solvent as the continuous phase and an aqueous solution with a higher specific gravity than the organic solvent as the dispersed phase, the filter is preferably set such that, when the volume of the housing is divided into an upper half and a lower half on the horizontal plane, it is completely contained in the upper half of the housing. The method of setting the filter inside the housing is not particularly restricted, but for treatment of a solution in which the continuous phase after extraction is water, the inlet tube for the water/organic solvent mixture connecting the housing and filter preferably has a structure extending from the bottom section of the housing, and for treatment of the solution after reverse extraction, the inlet tube for the water/organic solvent mixture preferably has a structure with the filter hanging down in a manner extending from the housing upper part. Such a construction will provide sufficient distance between the filter and the dispersion layer, helping to prevent coarsened droplets from flowing into the continuous phase, and stabilizing the separation performance.

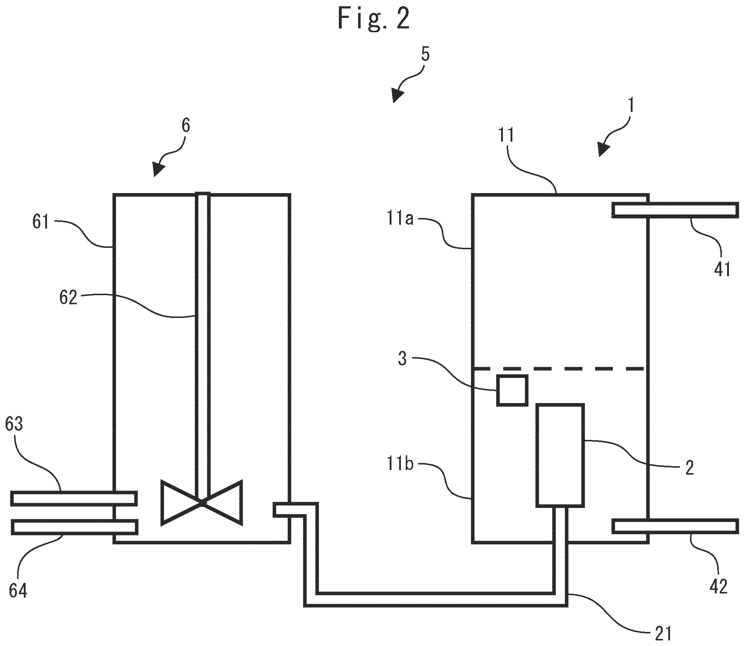

Fig. 2 is an example of a solvent extraction apparatus according to another embodiment of the invention. The solvent extraction apparatus 5 is provided with an extraction apparatus 6 and the aforementioned water/organic solvent separating apparatus 1, the extraction apparatus 6 comprising an extraction tank 61, stirring means 62, an organic solvent inlet 62 and a water inlet 63. There are no particular restrictions on the stirring means 62 and it may be stirring means used in a common mixer settler, and typically a stirrer provided with a propeller.

In a solvent extraction apparatus according to another embodiment of the invention, several such extraction apparatuses may be provided. The extraction efficiency can be increased by connecting several extraction apparatuses in series and conducting continuous treatment in multistages of countercurrent flow. Unlike a mixer settler, the solvent extraction apparatus according to this other embodiment of the invention does not require a settling tank, thus allowing the overall size to be reduced while achieving extraction efficiency equal to or greater than that of a mixer settler, while connecting several extraction apparatuses can provide an apparatus with higher extraction efficiency than a mixer settler at about the same size as a mixer settler.

Yet another embodiment of the invention is a water/organic solvent separation method comprising the following steps:
a liquid mixture separation step in which a liquid mixture comprising water and an organic solvent and having a dispersed phase ratio of 10 vol% to 50 vol% is supplied to a coalescing filter disposed inside the housing, which is provided with means for detecting the water/organic solvent interface and an outlet at the upper part and/or lower part, and separation treatment of the liquid mixture is carried out;
an interface detection step in which the height of the water/organic solvent interface is detected by the means for detecting the water/organic solvent interface; and
a height-adjusting step in which the outlet is opened and closed to adjust the height of the water/organic solvent interface in such a manner that the water/organic solvent interface and the coalescing filter do not contact.

Still another embodiment of the invention is a solvent extraction method comprising the following steps:
a liquid mixture preparation step in which water and an organic solvent are mixed and extracted to prepare a liquid mixture comprising the water and organic solvent and having a dispersed phase ratio of 10 vol% to 50 vol%,
a liquid mixture separation step in which the obtained liquid mixture is supplied to a coalescing filter disposed inside a housing, which is provided with means for detecting the water/organic solvent interface and an outlet at the upper part and/or lower part, and separation treatment of the liquid mixture is carried out;
an interface detection step in which the height of the water/organic solvent interface is detected by the means for detecting the water/organic solvent interface; and
a height-adjusting step in which the outlet is opened and closed to adjust the height of the water/organic solvent interface in such a manner that the water/organic solvent interface and the coalescing filter do not contact. The extraction apparatus used in part of the solvent extraction apparatus described above can be used for the liquid mixture preparation step in which water and an organic solvent are mixed for extraction to prepare a liquid mixture comprising the water and organic solvent and having a dispersed phase ratio of 10 vol% to 50 vol%.

In the water/organic solvent separation method and the solvent extraction method, if the volume of the housing is divided into an upper half and a lower half on the horizontal plane, the coalescing filter is disposed so as to be completely contained within the upper half or the lower half.

In this further embodiment of the invention, the coalescing filter and housing can be used in a configuration such that the water/organic solvent interface and coalescing filter do not contact in the housing, thus preventing formation of liquid bubbles at the filter surface and allowing high separation performance to be maintained.

The organic solvent used in the apparatus and method of this embodiment is not particularly restricted, and for example, it may be a hydrocarbon solvent such as benzene or diethyl ether, or a metal extractant used in the field of metal refining. The water used for this embodiment is also not particularly restricted, and it may be water dissolving a water-soluble salt, acid or alkali.

### EXAMPLES

The present invention will now be explained in detail using Examples and Comparative Examples.

### [Example 1]

A test was conducted using the water/organic solvent separating apparatus shown in Fig. 1. The dimensions of the water/organic solvent separating apparatus were 200 mmφ × 400 mmH, with the top of a cartridge-type coalescing filter (5-inch) having a PET nonwoven fabric as the main filter medium being set at a position 3.6 cm lower than the center of the housing. The water/organic solvent interface was located at the center of the housing, without contact between the coalescing filter and the water/organic solvent interface. The location corresponding to the center of the length from the water/organic solvent interface to the bottom section of the housing, overlapped with the center location of the coalescing filter. The water/organic solvent mixture used was a 5:5 volume ratio stirred mixture of top water (tap water) and a mixed organic solvent comprising a metal extractant (PC-88A) in a naphthene-based solvent (TECLEAN N-22), diluted to a volume ratio of 7:3. The water/organic solvent mixture used for this Example had water as the continuous phase and the organic solvent as the dispersed phase. The water/organic solvent mixture was passed through the inlet to the coalescing filter at 1 L/min. At 20 minutes after beginning filtration, the organic solvent and water were collected through the outlet. The residual water in the collected organic solvent was measured with a Karl Fischer moisture concentration meter, and the saturated dissolved concentration of water with respect to the organic solvent was subtracted to determine the residual free water concentration. The residual organic solvent (TOC) in the collected water was also measured with a TOC meter, and the saturated dissolved concentration of the organic solvent with respect to water was subtracted to determine the residual free organic solvent concentration. Lower residual free water concentration and residual free organic solvent concentration may be associated with more highly efficient separation of the water and organic solvent. The results are shown in Table 1 below.

### [Example 2]

The volume ratio between the water and organic solvent in the water/organic solvent mixture was 6:4, and the coalescing filter (5-inch) was set so that its upper part was located 1.6 cm below the center of the housing. The flow rate of each solution discharged from the water outlet tube and organic solvent outlet tube of the housing was controlled to that the water/organic solvent interface was 4 cm above the center of the housing. The location corresponding to the center of the length from the water/organic solvent interface to the bottom section of the housing, overlapped with the center location of the coalescing filter, without contact between the coalescing filter and the water/organic solvent interface. The test was conducted with the other conditions being the same as in Example 1. The water/organic solvent mixture used for this Example had water as the continuous phase and the organic solvent as the dispersed phase. The results are shown in Table 1 below.

### [Example 3]

A test was conducted in the same manner as Example 2, except that the coalescing filter was set at the center of the housing, and the flow rate of each solution discharged from the water outlet tube and organic solvent outlet tube of the housing was controlled so that the water/organic solvent interface was 8 cm above the center of the housing. The coalescing filter was not in contact with the water/organic solvent interface. The water/organic solvent mixture used for this Example had water as the continuous phase and the organic solvent as the dispersed phase. The results are shown in Table 1 below.

### [Example 4]

The volume ratio between the water and organic solvent in the water/organic solvent mixture was 4:6, and the coalescing filter (5-inch) was set so that its bottom section was located 1.6 cm above the center of the housing. The flow rate of each solution discharged from the water outlet tube and organic solvent outlet tube of the housing was controlled so that the water/organic solvent interface was 4 cm below the center of the housing. The location corresponding to the center of the length from the water/organic solvent interface to the upper part of the housing, overlapped with the center location of the coalescing filter, without contact between the coalescing filter and the water/organic solvent interface. The test was conducted with the other conditions being the same as in Example 1. The water/organic solvent mixture used for this Example had the organic solvent as the continuous phase and water as the dispersed phase. The results are shown in Table 1 below.

### [Example 5]

A test was conducted under the same conditions as Example 4, except that the coalescing filter was set at the center of the housing, and the flow rate of each solution discharged from the water outlet tube and organic solvent outlet tube of the housing was controlled so that the water/organic solvent interface was at a position 8 cm below the center of the housing. The coalescing filter was not in contact with the water/organic solvent interface. The water/organic solvent mixture used for this Example had the organic solvent as the continuous phase and water as the dispersed phase. The results are shown in Table 1 below.

### [Comparative Example 1]

A test was conducted under the same conditions as Example 1, except that instead of using the water/organic solvent separating apparatus of the invention, the water/organic solvent was conveyed to a settling tank (dimensions: 300 mmW × 500 mmD × 200 mmH) at 1 L/min and allowed to separate by standing while being retained for 30 minutes, after which the organic solvent and water were collected. The results are shown in Table 1 below.

### [Comparative Example 2]

A test was conducted under the same conditions as Comparative Example 1, except that the water and organic solvent ratio in the water/organic solvent mixture was 4:6. The results are shown in Table 1 below. The water/organic solvent mixture used for this Example had water as the dispersed phase and the organic solvent as the continuous phase.

### [Comparative Example 3]

A test was conducted under the same conditions as Example 1, except that the coalescing filter was set at the center section in the height direction of the housing, and the state of contact between the water/organic solvent interface and the coalescing filter was maintained, without opening and closing the organic solvent outlet tube and water outlet tube to adjust the location of the water/organic solvent interface. The results are shown in Table 1 below.

**[Table 1]**

| | Water/oil ratio | Settling tank used | Coalescer used | Contact between coalescer and water/ organic solvent interface | Coalescer position | Residual free water concentration [ppm] | Residual free organic solvent concentration [ppm] | Apparatus volume ratio |
|---|---|---|---|---|---|---|---|---|
| Example 1 | 5/5 | No | Yes | No | Lower | 10 | 20 | 1 |
| Example 2 | 6/4 | No | Yes | No | Lower | 10 | 20 | 1 |
| Example 3 | 6/4 | No | Yes | No | Center | 10 | 30 | 1 |
| Example 4 | 4/6 | No | Yes | No | Upper | 10 | 20 | 1 |
| Example 5 | 4/6 | No | Yes | No | Center | 20 | 20 | 1 |
| Comp. Example 1 | 5/5 | Yes | No | No | - | 100 | 300 | 2.4 |
| Comp. Example 2 | 4/6 | Yes | No | No | - | 100 | 300 | 2.4 |
| Comp. Example 3 | 5/5 | No | Yes | Yes | Center | 50 | 100 | 1 |

From Table 1 it can be seen that in Examples 1 to 5, the apparatus size was smaller and the water/organic solvent separation efficiency was superior, compared to Comparative Examples 1 to 3.

### INDUSTRIAL APPLICABILITY

The water/organic solvent separating apparatus, the water/organic solvent separation method using the apparatus, the solvent extraction apparatus and the solvent extraction method using the apparatus, according to the invention, allow highly efficient water/organic solvent separation to be accomplished during separation of liquid mixtures after solvent extraction, and can contribute to smaller sizes for extraction separation apparatuses and/or solvent extraction apparatuses. The invention is therefore industrially useful since the reduction in size allows extraction efficiency equal to or greater than a mixer settler, with increased throughput using an apparatus size equal to or smaller than a mixer settler.

### REFERENCE SIGNS LIST

1 Water/organic solvent separating apparatus
11 Housing
11a Housing upper part
11b Housing lower part
2 Coalescing filter
21 Water/organic solvent mixture inlet tube
3 Interface detector
41 Organic solvent outlet
42 Water outlet
5 Solvent extraction apparatus
6 Extraction apparatus
61 Stirring tank
62 Stirring means
63 Organic solvent inlet tube
64 Water inlet tube

## Claims

1. A water/organic solvent separating apparatus that is supplied with a liquid mixture comprising water and an organic solvent, and is provided with a coalescing filter that carries out separation treatment of the liquid mixture and a housing to which the liquid mixture that has been separated by the coalescing filter is supplied, the coalescing filter being disposed inside the housing and the housing having a structure or mechanism such that the water/organic solvent interface and coalescing filter do not contact.

2. The water/organic solvent separating apparatus according to claim 1, wherein when the volume of the housing is divided into an upper half and a lower half on the horizontal plane, the coalescing filter is disposed so as to be completely contained within the upper half or the lower half.

3. The water/organic solvent separating apparatus according to claim 1 or 2, wherein the housing is provided with means for detecting the water/organic solvent interface, and an outlet at the upper part and/or lower part of the housing, and is further provided with a mechanism that opens and closes the outlet in such a manner that the water/organic solvent interface does not contact with the coalescing filter, to adjust the height of the water/organic solvent interface.

4. A solvent extraction apparatus comprising a water/organic solvent separating apparatus according to claim 1 or 2, and provided with an extraction apparatus that mixes water and an organic solvent to carry out extraction at a stage prior to the water/organic solvent separating apparatus, and discharges the liquid mixture containing the water and organic solvent.

5. A water/organic solvent separation method comprising the following steps:
a liquid mixture separation step in which a liquid mixture comprising water and an organic solvent and having a dispersed phase ratio of 10 vol% to 50 vol% is supplied to a coalescing filter disposed inside a housing, which is provided with means for detecting a water/organic solvent interface and an outlet at the upper part and/or lower part, and separation treatment of the liquid mixture is carried out;
an interface detection step in which the height of the water/organic solvent interface is detected by the means for detecting the water/organic solvent interface; and
a height-adjusting step in which the outlet is opened and closed to adjust the height of the water/organic solvent interface in such a manner that the water/organic solvent interface and the coalescing filter do not contact.

6. A solvent extraction method comprising the following steps:
a liquid mixture preparation step in which water and an organic solvent are mixed and extracted to prepare a liquid mixture comprising the water and organic solvent and having a dispersed phase ratio of 10 vol% to 50 vol%,
a liquid mixture separation step in which the obtained liquid mixture is supplied to a coalescing filter disposed inside a housing, which is provided with means for detecting the water/organic solvent interface and an outlet at the upper part and/or lower part, and separation treatment of the liquid mixture is carried out;
an interface detection step in which the height of the water/organic solvent interface is detected by the means for detecting the water/organic solvent interface; and
a height-adjusting step in which the outlet is opened and closed to adjust the height of the water/organic solvent interface in such a manner that the water/organic solvent interface and the coalescing filter do not contact.

7. The solvent extraction method according to claim 5 or 6, wherein when the volume of the housing is divided into an upper half and a lower half on the horizontal plane, the coalescing filter is disposed so as to be completely contained within the upper half or the lower half.
